# EUROPEAN PATENT SPECIFICATION

(11) **EP 3 406 513 B1**
(45) Date of publication and mention of the grant of the patent: **23.08.2023**
(21) Application number: 18175954.9
(22) Date of filing: 05.03.2015
(51) Int. Cl.: B63B 25/08, B65D 90/52

(54) **SYSTEM FOR CONTROLLING IMPACT LOAD RESULTING FROM FLUID UNDER INTERNAL/EXTERNAL FORCE IN SPECIFIC ENVIRONMENT**
SYSTEM ZUR STEUERUNG EINER STOSSBELASTUNG ALS ERGEBNIS EINER FLÜSSIGKEIT UNTER INNERER/ÄUSSERER KRAFT IN EINER SPEZIFISCHEN UMGEBUNG
SYSTÈME DE COMMANDE DE CHARGE D'IMPACT RÉSULTANT D'UN FLUIDE FACE À UNE FORCE INTERNE/EXTERNE DANS UN ENVIRONNEMENT SPÉCIFIQUE

(30) Priority: 05.03.2014 KR 20140026086
(43) Date of publication of application: 28.11.2018
(62) Divisional of application: 15757737.0
(73) Proprietor: Cytroniq Co., Ltd., Cheonan-si, Chungcheongnam-do 331-200 (KR)
(72) Inventor: LEE, Michael MyungSub, 156-824 Seoul (KR)
(74) Representative: Isarpatent

(56) References cited:
- DE-U1-202006 012 427
- JP-A- S6 136 091
- KR-A- 20130 060 482
- KR-A- 20130 083 139
- US-B1- 6 220 287

## Description

### Technical field

The present invention relates to a system for controlling an impact load resulting from a fluid under an internal/external force in a specific environment interworking with environmental external monitoring. More specifically, the present invention relates to a system for controlling an impact load resulting from a fluid under an internal/external force in a specific environment applicable to fluid existing in the river, lake, sea and transportation devices, etc., which can minimize impact load of a fluid under internal/external force including sloshing, slamming, and ice collision, in consideration of the environmental external force and movement of maritime structure or transportation devices.

### Background art

In general, in order to transport fluid cargos, various forms of vessels are manufactured.

For example, in order to transport fluid or fuel such as LNG, LPG, hydrate, crude oil, etc., transportation devices are manufactured reflecting the characteristic of each transportation material and effect of internal/external force in the environment. In this regard, transportation devices or fuel windows of a particular shape are applied so as to seal or keep the transportation material at extremely low temperature, low temperature or high temperature, etc. in the transportation device.

When manufacturing such transportation device or fuel window, one of the important load conditions is sloshing.

Here, sloshing means a behavior of the fluid causing strong impact to an inner wall of a transportation device while radically shaking the fluid having a free surface by continuously receiving kinetic energy due to the movement of transportation devices such as a hull. The sloshing problem needs to be considered from an initial stage of manufacturing a maritime structure or transportation device.

Thus, the maritime structure or transportation device is designed to minimize the sloshing by a fluid while sufficiently standing the expected sloshing load.

Also, during this process, in order to avoid sloshing load which is difficult to stand structurally, ship owners had to accept conditional shipping conditions limiting the cargo load.

Nevertheless, due to the uncertainty of the sloshing load, there are many problems relating to damage on unexpected cargo holds.

In order to solve the above, Korean Patent No. 1043622 discloses a device for inhibiting sloshing including a plurality of buoyant bodies floating on the surface of liquid cargo.

However, since the conventional technologies cannot block sloshing occurring inside liquid cargo, the sloshing load occurring on the surface of the liquid cargo is very irregular, and the sloshing load is too big, and thus there is a limitation in blocking sloshing.

Thus, a system for controlling an impact load resulting from a fluid under an internal/external force in a specific environment applicable to fluid existing in the river, sea or transportation means, which can minimize the impact load resulting from a fluid under an internal/external force including sloshing, slamming, or ice collision, in consideration of the effect of internal/external force in a specific environment such as inside a transportation device or natural environment, is required.

KR 2013 0060482 discloses a sloshing reduction module for a liquid cargo tank comprising a cargo tank and one or more reduction units, wherein the cargo tank is arranged in a hull and has a space where liquid cargo is stored, and one or more reduction units are rotationally installed inside the cargo tank and generate lift and drag against a free motion of the liquid cargo stored in the cargo tank according to the fluctuation of the hull.

### Summary of invention

The task of an embodiment of the prevent invention is to provide a transportation means for storing fluid therein comprising: a bumper plate fixed to a fixed axis connected to an inner wall of the transportation means and suitable to reduce sloshing of the fluid or to control an impact load resulting from fluid, wherein the bumper plate is adapted to rotate in the up, down, left, or right direction of the transportations means, and characterized in that the bumper plate is adapted to rotate about Y axis and Z axis among X, Y, Z axis when Y axis direct to upward of the transportation means, and Z axis is perpendicular to Y axis and parallel to the inner wall of the transportation means, wherein a support protrudes from the inner wall, and the fixed axis is arranged at an end of the support, enabling rotation movement in the up, down, left, or right direction..

### Brief description of drawings

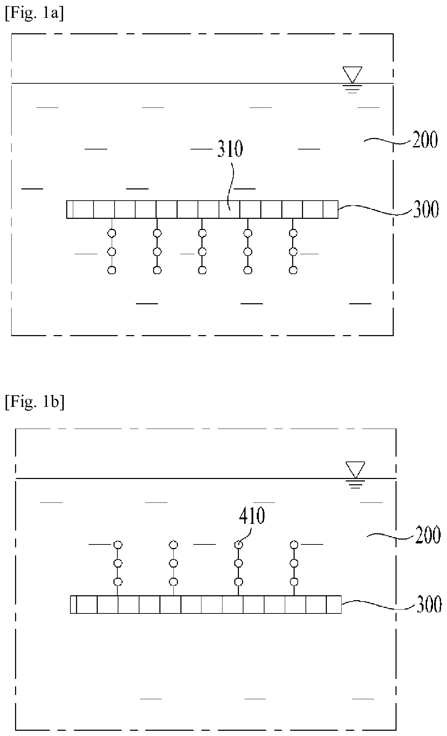

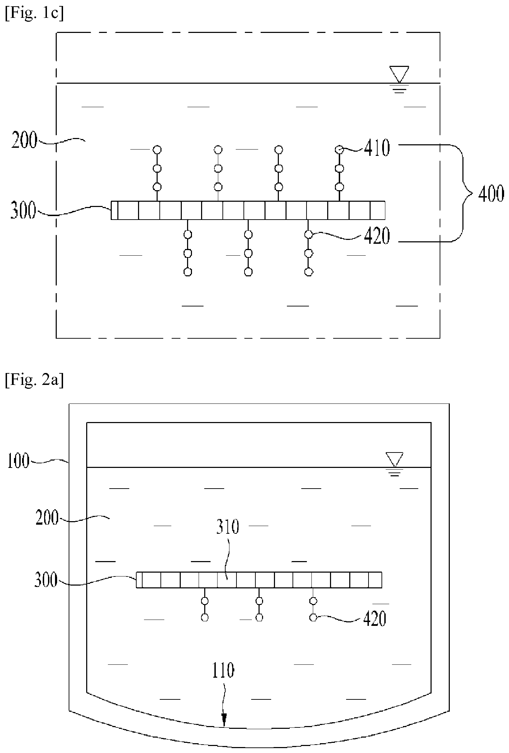

Figs. 1a to 1c are cross-sectional views illustrating a condition applying the system for controlling an impact load resulting from fluid under internal/external force in a specific environment, which is not part of the invention but provided for illustration purpose;

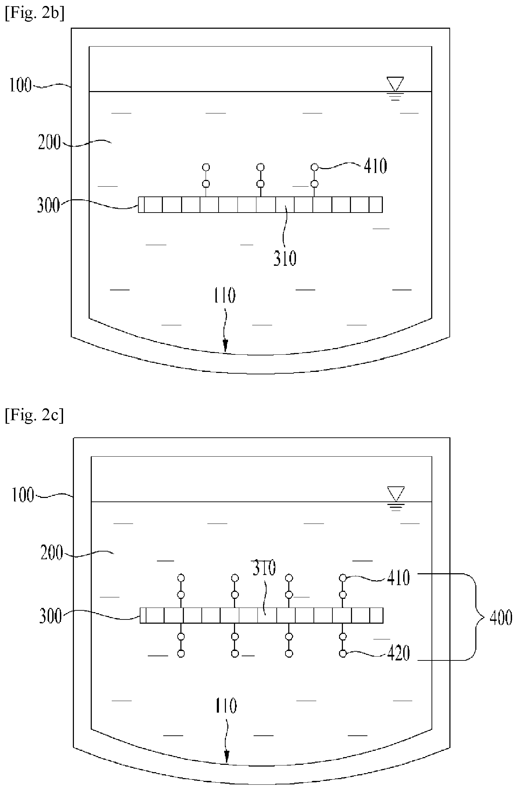

Figs. 2a to 2c are cross-sectional views illustrating a condition applying the system for controlling an impact load resulting from fluid under internal/external force in a specific environment, which is not part of the invention but provided for illustration purpose;

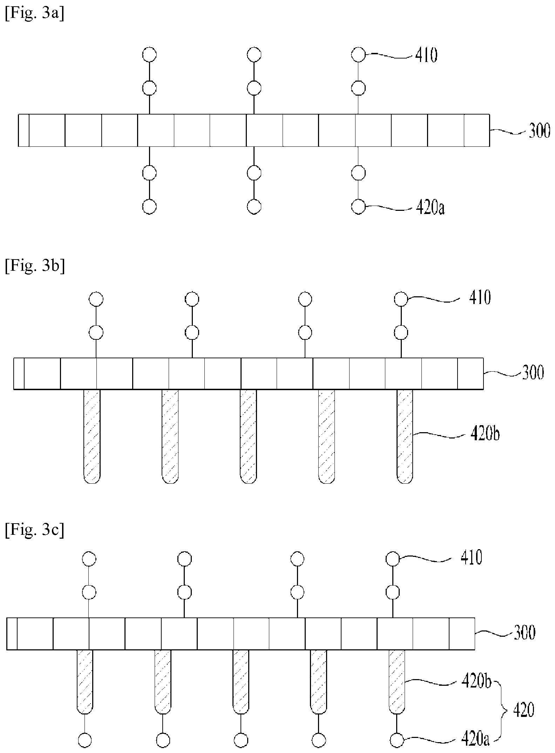

Figs. 3a to 3c are cross-sectional views illustrating a position adjustment means applied to the system for controlling an impact load resulting from fluid under internal/external force in a specific environment, which is not part of the invention but provided for illustration purpose;

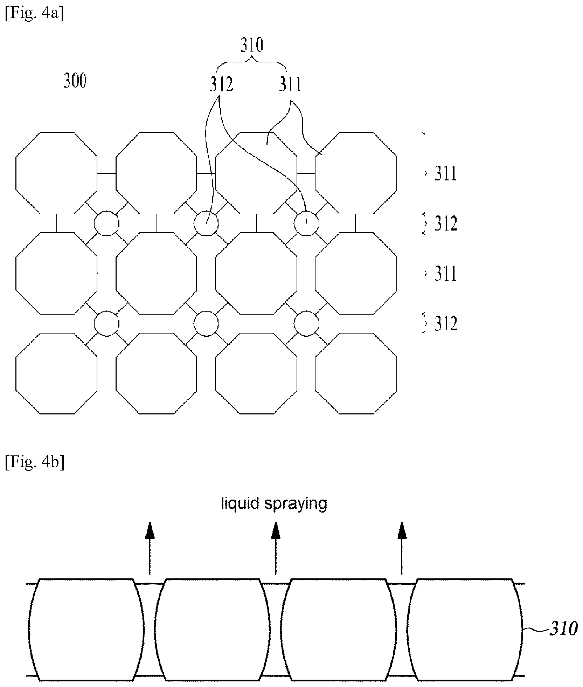

Figs. 4 to 7 are plan views illustrating an arrangement of a floating means applied to the system for controlling an impact load resulting from fluid under internal/external force in a specific environment, which is not part of the invention but provided for illustration purpose;

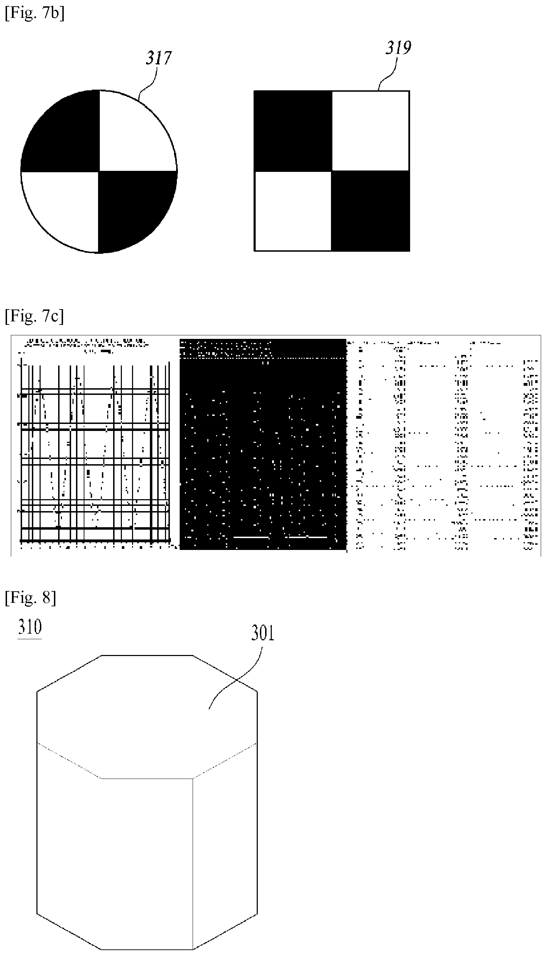

Figs. 8 to 12 are perspective views and cross-sectional views illustrating a mat member of a floating means applied to the system for controlling an impact load resulting from fluid under internal/external force in a specific environment, which is not part of the invention but provided for illustration purpose;

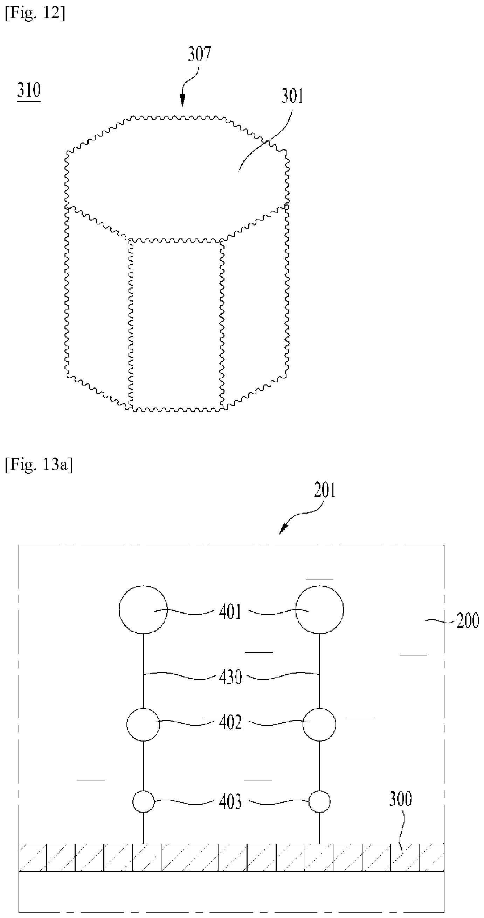

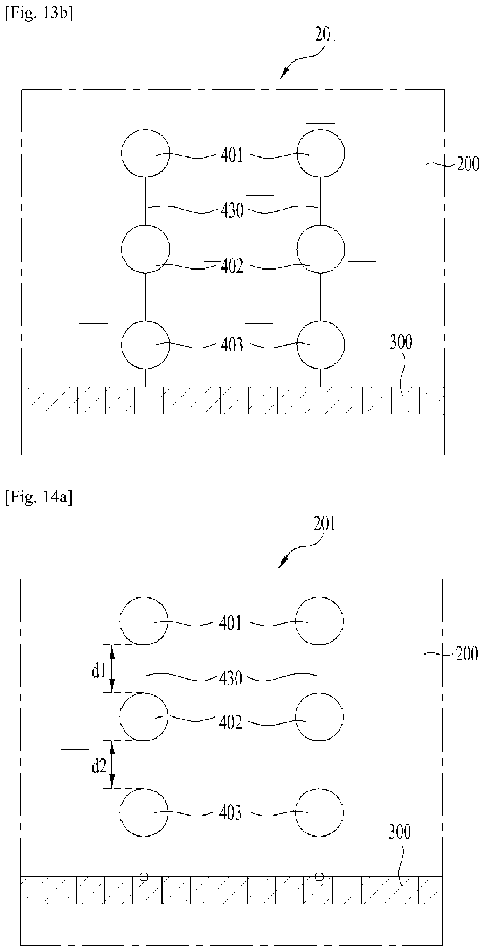

Figs. 13a and 13b are cross-sectional views illustrating that a position adjustment means applied to the system for controlling an impact load resulting from fluid under internal/external force in a specific environment, which is not part of the invention but provided for illustration purpose;

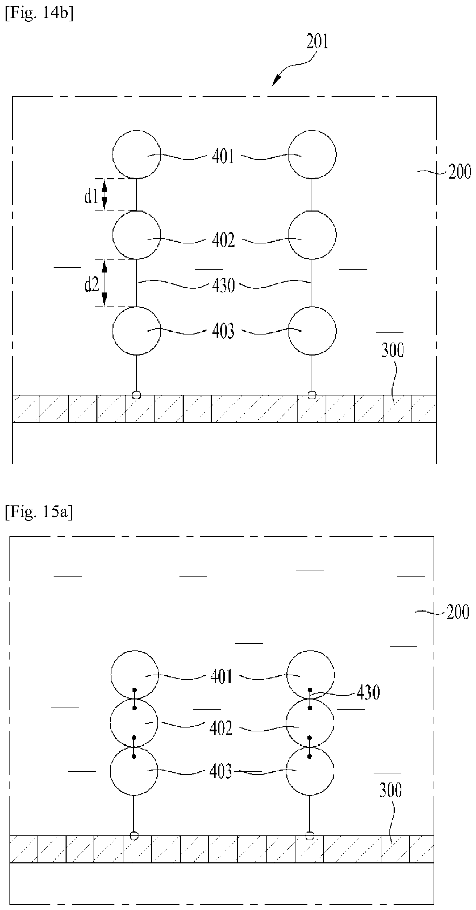

Figs. 14a and 14b are cross-sectional views illustrating intervals between the position adjustment means applied to the system for controlling an impact load resulting from fluid under internal/external force in a specific environment, which is not part of the invention but provided for illustration purpose;

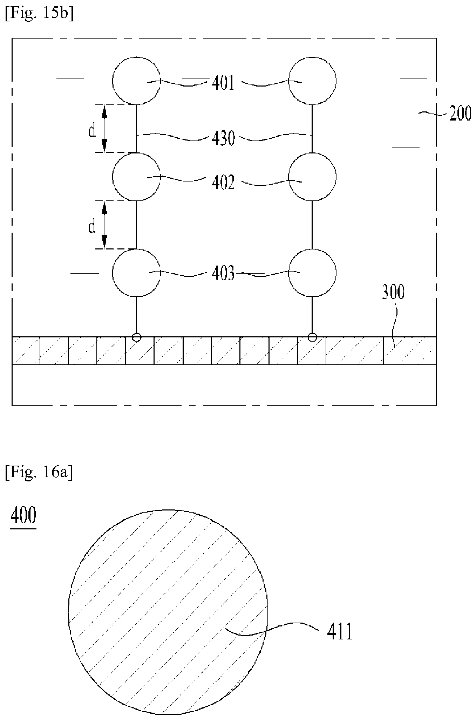

Figs. 15a and 15b are cross-sectional views illustrating a contact condition of position adjustment means applied to the system for controlling an impact load resulting from fluid under internal/external force in a specific environment, which is not part of the invention but provided for illustration purpose;
Figs. 16a to 16f are cross-sectional views illustrating an inner structure of a position adjustment means applied to the system for controlling an impact load resulting from fluid under internal/external force in a specific environment, which is not part of the invention but provided for illustration purpose;

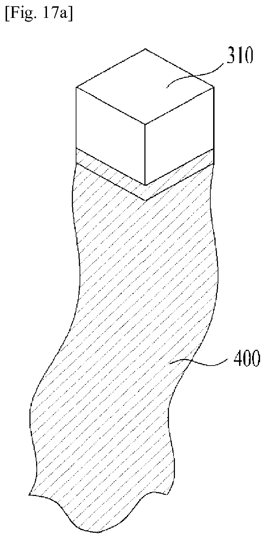

Figs. 17a to 17d are perspective views illustrating a position adjustment means having a curtain shape applied to the system for controlling an impact load resulting from fluid under internal/external force in a specific environment, which is not part of the invention but provided for illustration purpose;

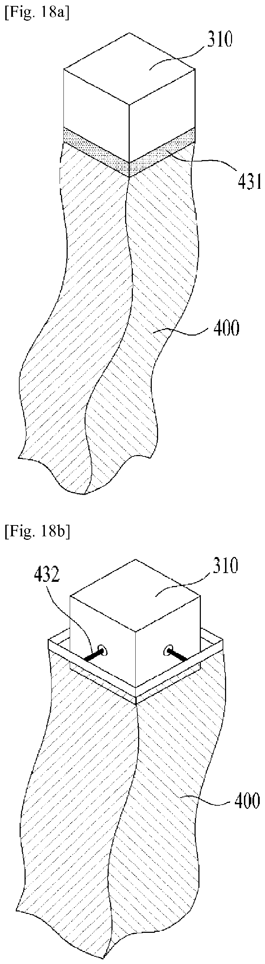

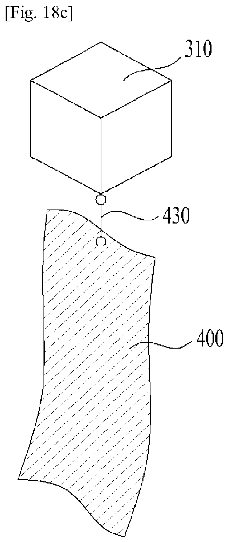

Figs. 18a to 18c are perspective views illustrating a condition of the connection between a position adjustment means having a curtain shape and a floating means applied to the system for controlling an impact load resulting from fluid under internal/external force in a specific environment, which is not part of the invention but provided for illustration purpose;

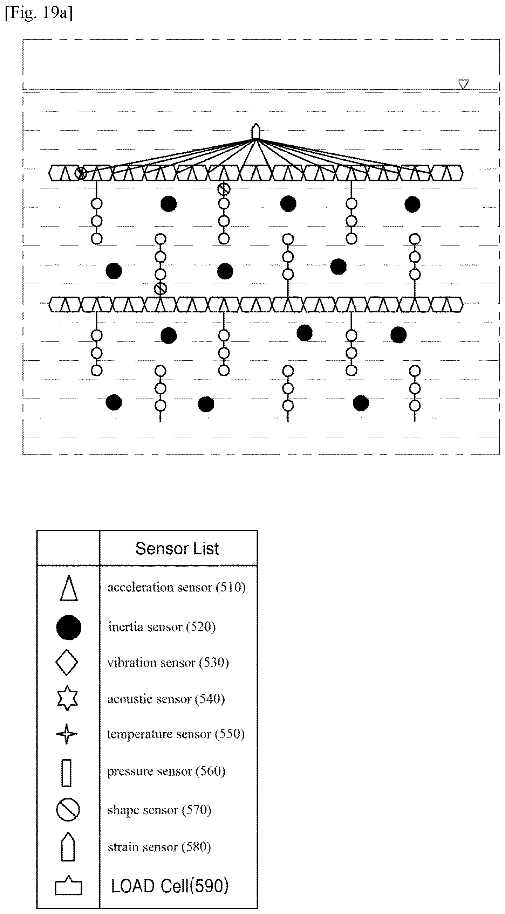

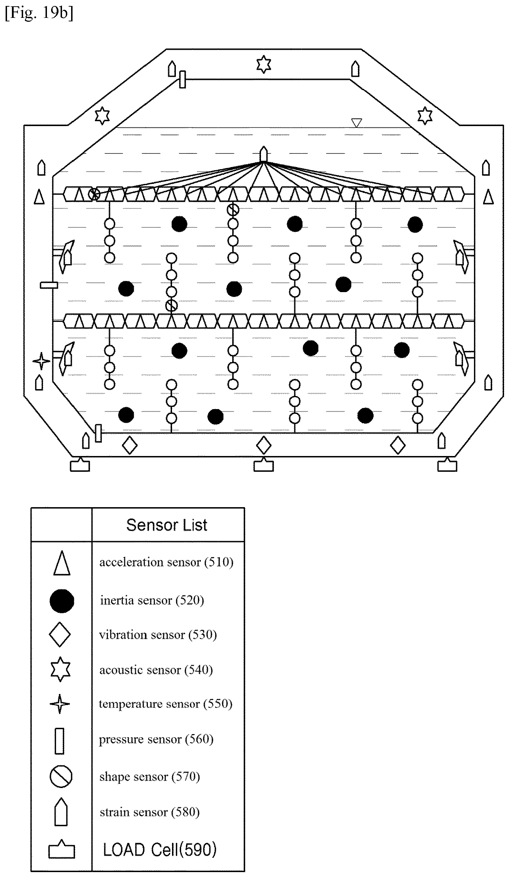

Figs. 19a and 19b are cross-sectional views illustrating an arrangement of a sensor sensing a movement of impact load of fluid applied to the system for controlling an impact load resulting from fluid under internal/external force in a specific environment, which is not part of the invention but provided for illustration purpose;

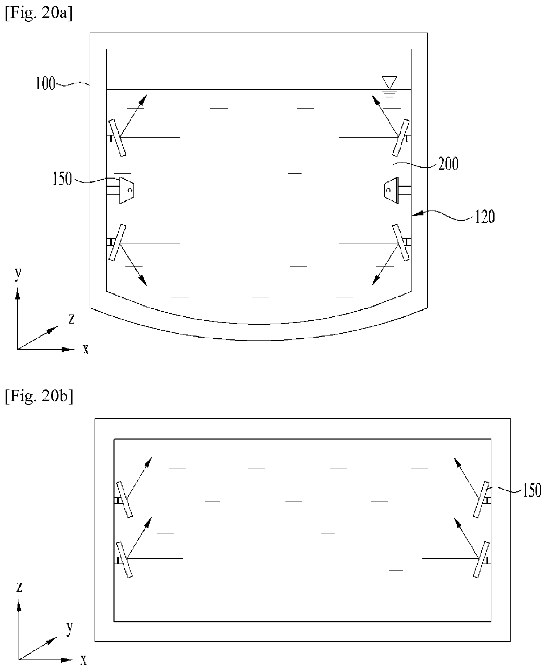

Figs. 20a and 20b are cross-sectional views illustrating a condition having a bumper plate installed in an inner wall of a transportation means when the system for controlling an impact load resulting from fluid under internal/external force in a specific environment according to a preferable embodiment of the present invention is installed in a transportation means;

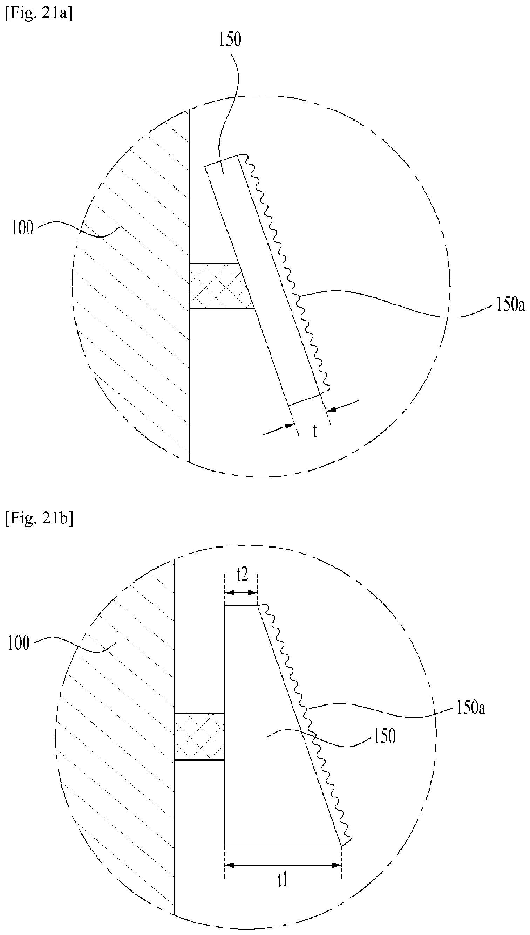

Figs. 21a and 21b are side cross-sectional views illustrating a thickness of a bumper plate installed in an inner wall of a transportation means when the system for controlling an impact load resulting from fluid under internal/external force in a specific environment according to a preferable embodiment of the present invention is installed in a transportation means;

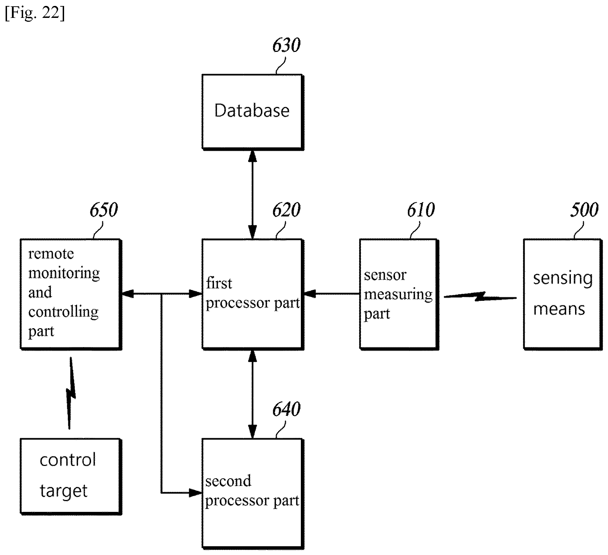

Fig. 22 is a block diagram of a control means 600 applied to the system for controlling an impact load resulting from fluid under internal/external force in a specific environment, which is not part of the invention but provided for illustration purpose;

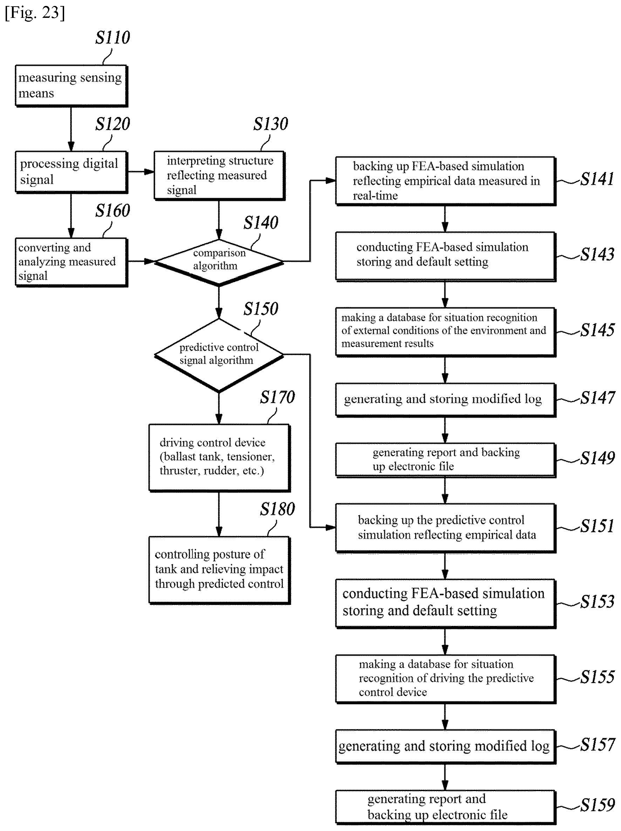

Fig. 23 is a control flow chart for explaining a control operation of the system for controlling an impact load resulting from fluid under internal/external force in a specific environment, which is not part of the invention but provided for illustration purpose; and

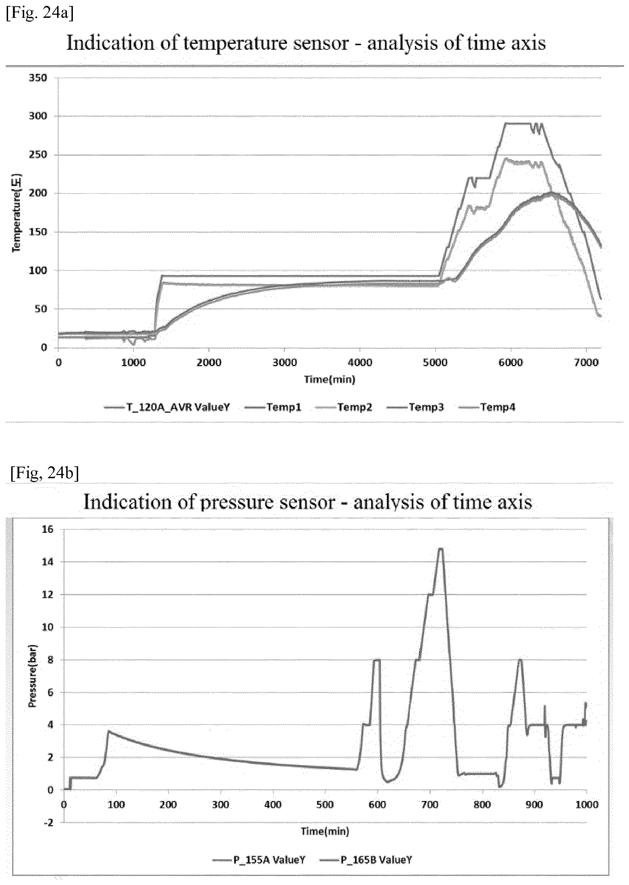

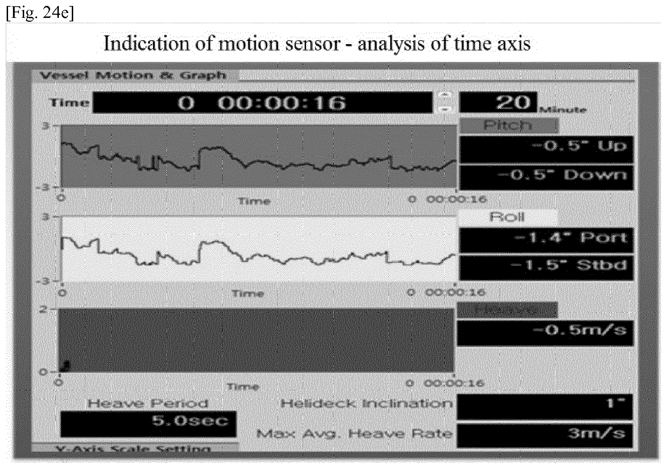

Figs. 24a and 24e are graphs illustrating measurement data sensed at a sensing means of the system for controlling an impact load resulting from fluid under internal/external force in a specific environment, which is not part of the invention but provided for illustration purpose.

### Best mode for carrying out the invention

Hereinafter, the present invention will be described in detail with reference to the drawings.

In the following description, usage of suffixes such as "module" and "part" used for referring to elements is given merely to facilitate explanation of the present invention, and the "module" and "part" may be used interchangeably.

Further, hereinafter, exemplary embodiments of the present invention are described with reference to the accompanying drawings and contents disclosed therein, however, the present invention is not limited thereto or restricted thereby.

The terms used in this specification were selected to include current, widely-used, general terms, in consideration of the functions of the present invention. However, the terms may represent different meanings according to the intentions of the skilled person in the art or according to customary usage, the appearance of new technology, etc. In certain cases, a term may be one that was arbitrarily established by the applicant. In such cases, the meaning of the term will be defined in the relevant portion of the detailed description. As such, the terms used in the specification are not to be defined simply by the name of the terms but are to be defined based on the meanings of the terms as well as the overall description of the present invention.

Figs. 1a to 1c are cross-sectional views illustrating a condition applying a system for controlling an impact load resulting from fluid under internal/external force in a specific environment to natural environment such as rivers, lakes, and sea. Figs. 2a to 2c are cross-sectional views illustrating a condition applying a system for controlling an impact load resulting from fluid under internal/external force in a specific environment to a transportation means such as a container or a fuel window. Figs. 19a and 19b are cross-sectional views illustrating an arrangement of a sensor sensing a movement of impact load of fluid applied to the system for controlling an impact load resulting from fluid under internal/external force in a specific environment.

As shown in Figs. 1a to 1c, 2a to 2c, and 19a and 19b, the system for controlling an impact load resulting from fluid under internal/external force in a specific environment includes a floating means 300 arranged horizontally inside a predetermined amount of fluid 200 existing in an open space or in a space having a sealed interior; a position adjustment means 400 vertically connected to the floating means 300 and arranged in a preset position inside the fluid; and a sensing means 500 selectively installed inside the fluid 200, on the floating means 300, on the position adjustment means 400, or on a structure positioned in the periphery to sense a physical change of at least one preset measurement object.

The system for sensing an impact load may be applied to a liquefied natural gas carrier (LNGC), a floating-LNG (F-LNG), a floating storage regasification unit (FSRU), an LNG fueled vessel (LNGFV), an LNG bunkering vessel (LNGBV), an LNG bunkering terminal (LNGBT), etc.

Also, the fluid 200 means a condition where raw materials in gas state, liquid state and ice state are mixed in an unspecified form. This may apply in the same manner to all cases where the fluid is in gas state and liquid state, or where fluid ice including gas or other particles is mixed.

Figs. 3a to 3c are cross-sectional views illustrating a position adjustment means applied to the system for controlling an impact load resulting from fluid under internal/external force in a specific environment.

Referring to Figs. 3a to 3c, the position adjustment means 400 includes at least one of a first floating body 410 arranged at an upper part of the floating means 300 and a second floating body 420 arranged at a lower part of the floating means 300.

In this case, preferably, the first floating body 410 of the position adjustment means 400 is formed to have a specific gravity smaller than the fluid 200 and the floating means 300, thus having the highest buoyancy, the second floating body 420 of the position adjustment means 400 is formed to have a specific gravity greater than the fluid 200 and the floating means 300, thus having the smallest buoyancy, and the floating means 300 is formed to have a specific gravity greater than the fluid 200 and the first floating body 410 and smaller than the second floating body 420, thus having a buoyancy therebetween.

As shown in Fig. 3a, preferably, the first floating body 410 and the second floating body 420 of the position adjustment means 400 are formed of a floating member 420a formed of a phenol resin, a melamine resin, and a synthetic resin thereof, and the first floating body 410 is formed to have a specific gravity smaller than the second floating body 420.

Also, the floating member 420a may be formed of a plurality of minute holes in the external surface, or formed of an uneven pattern on the side surface in some cases.

In some cases, as shown in Fig. 3b, the first floating body 410 of the position adjustment means 400 may be formed of a floating member having a buoyant body, and the second floating body 420 of the position adjustment means 400 may be formed of a curtain member 420b having a curtain shape formed of a phenol resin, a melamine resin, and a synthetic resin thereof.

Here, the curtain member 420b may be formed of one single member arranged to surround along a side circumference of the floating means 300, and in some cases, the curtain member 420b may be formed of a plurality of members arranged to surround along a side circumference of the floating means 300.

Here, when there are a plurality of curtain members 420b, adjacent curtain members may be arranged at predetermined intervals.

Also, a surface of the curtain member 420b may be formed of a plurality of holes where the fluid may float around.

Also, the curtain member 420b may be fixed or locked to the floating means 300 using at least one of an adhesive 310 and a locking member.

Alternatively, as shown in Fig. 3c, the first floating body 410 of the position adjustment means 400 may be a floating member having a buoyant body, and the second floating body 420 of the position adjustment means 400 may include both a curtain member 420b having a curtain shape and a floating member 420a having buoyancy.

That is, the second floating body 420 of the position adjustment means 400 may be configured to have a floating member 420a locked at an end of the curtain member 420b having a curtain shape.

Figs. 4 to 7 are plan views illustrating an arrangement of a floating means applied to the system for controlling an impact load resulting from fluid under internal/external force in a specific environment.

Referring to Figs. 4 to 7, the floating means 300 is formed of a plurality of mat members 310 connected to one another using a wire or rope, and mat members 310 having a function of a buoyant body are arranged at predetermined intervals to have a predetermined empty space. Thus, when liquid in the fluid 200 and the mat member 310 are sprayed between mat members 310 by inertial motion during movement, evaporated fluid in an upper part of the mat member 310 is re-collected in liquid state. In this case, in order to increase the re-collection rate of liquid included in the fluid 200, preferably, a plurality of minute holes or an uneven pattern is formed in the upper external surface and the side surface of the mat member 310.

Here, the mat member 310 may be formed using specific materials such as a phenol resin, a melamine resin, and a synthetic resin thereof.

As such, as shown in Fig. 4, the floating means 300 formed of a plurality of mat members 310 connected to one another may include a first mat member 311 arranged in an odd number of columns and a second mat member 312 arranged in an even number of columns. In this regard, the first mat member 311 and the second mat member 312 are arranged crisscross each other.

Here, the first mat member 311 and the second mat member 312 may be formed in different shapes or in the same shape.

In some cases, adjacent first mat members 311 may be formed in different shapes or in the same shape, and adjacent second mat members 312 may be formed in different shapes or in the same shape.

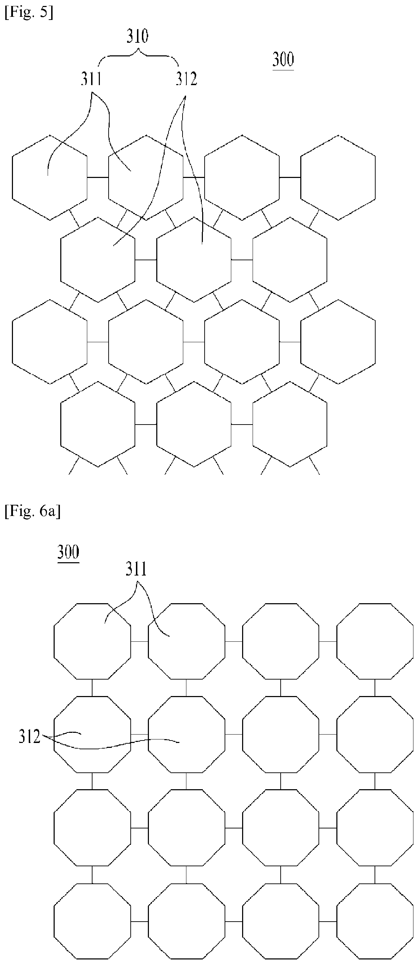

For example, as shown in Fig. 5, the floating means 300 may include a first mat member 311 arranged in an odd number of columns and a second mat member 312 arranged in an even number of columns. In this regard, the first mat member 311 and the second mat member 312 are arranged crisscross each other.

Here, the first mat member 311 and the second mat member 312 may have the same shape.

As another example, as shown in Fig. 6a, the floating means 300 may include a first mat member 311 arranged in an odd number of columns and a second mat member 312 arranged in an even number of columns. In this regard, the first mat member 311 and the second mat member 312 are arranged crisscross each other.

Here, the first mat member 311 and the second mat member 312 may have different shapes.

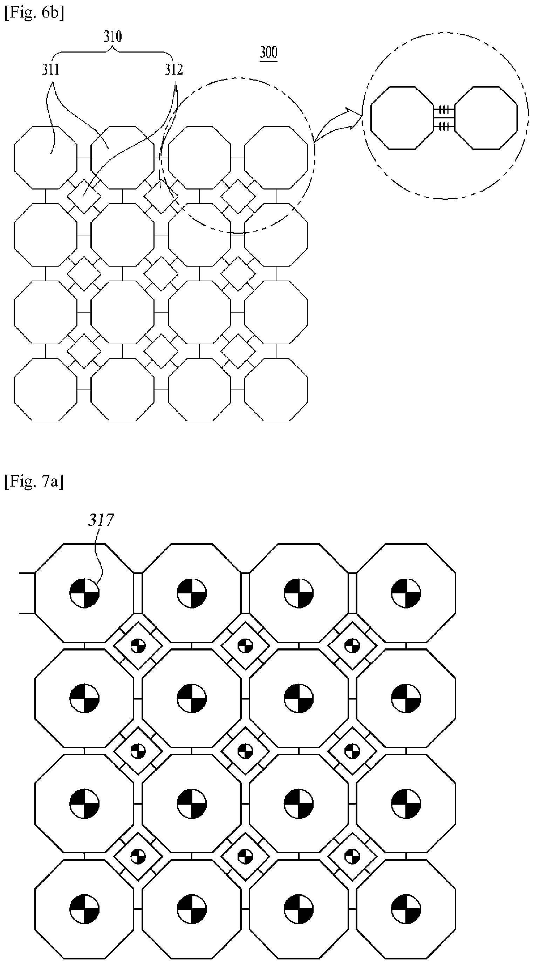

As another example, as shown in Fig. 6b, the floating means 300 may include a first mat member 311 arranged in an odd number of columns and a second mat member 312 arranged in an even number of columns, and a first mat member 311 and a second mat member 312 may be arranged parallel to each other to form a lattice structure. In this case, the first mat member 311 and the second mat member 312 may have the same shape.

As shown in Fig. 6a, it is possible to apply a strain sensor measuring the shape or the extension or contraction of at least one axis when a 3-axis acceleration sensor is installed inside the mat member 310.

Here, as shown in Figs. 7a to 7c, identification marks 317 and 319 capable of identifying an image or laser are formed or attached to an upper surface of each mat member 310, so as to allow the control means 600 to measure and diagnose the position and six-degree-of-freedom movement of each mat member 310, thereby enabling optimized measurement and control of the impact load.

Here, as shown in Fig. 7b, preferably, the identification marks 317 and 319 use circular or quadrangular identification marks indicating quadrants, so as to distinguish rotating angles.

Figs. 8 to 12 are perspective views and cross-sectional views illustrating a mat member of a floating means applied to the system for controlling an impact load resulting from fluid under internal/external force in a specific environment.

Referring to Figs. 8 to 12, the floating means 300 is formed of a plurality of mat members 310 connected to one another, and the mat members 310 are arranged at predetermined intervals to have a predetermined empty space.

As shown in Fig. 8, each mat member 310 of the floating means 300 may be formed only of a body part 301 playing the role of a buoyant body.

Here, the body part 301 may be made of a material having a predetermined specific gravity, and for example, aluminum or aluminum alloy may be used.

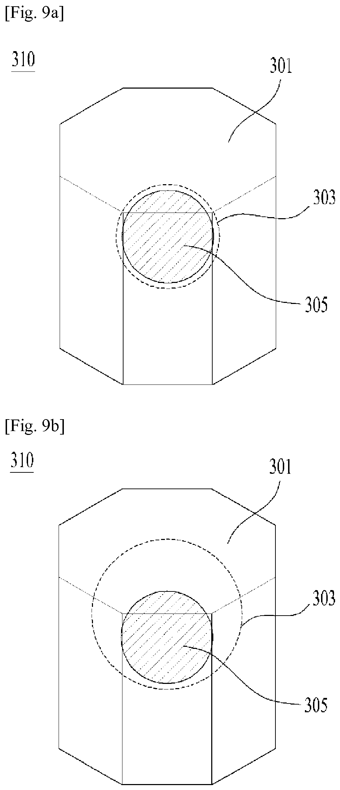

Next, as shown in Figs. 9a and 9b, each mat member 310 of the floating means 300 includes a body part 301 having a closed space 303 in the center of an inner portion, and a buoyant body 305 arranged in the closed space 303 of the body part 301.

Here, as shown in Fig. 9a, the buoyant body 305 may take up an entire area of the closed space 303, and in some cases, as shown in Fig. 9b, the buoyant body 305 may take up only a part of the area of the closed space 303 and leave a space for controlling the position so that the floating means 100 may float at a predetermined depth.

In this case, the body part 301 may be formed using a foam member, and the buoyant body 305 may use aluminum or aluminum alloy having a predetermined specific gravity.

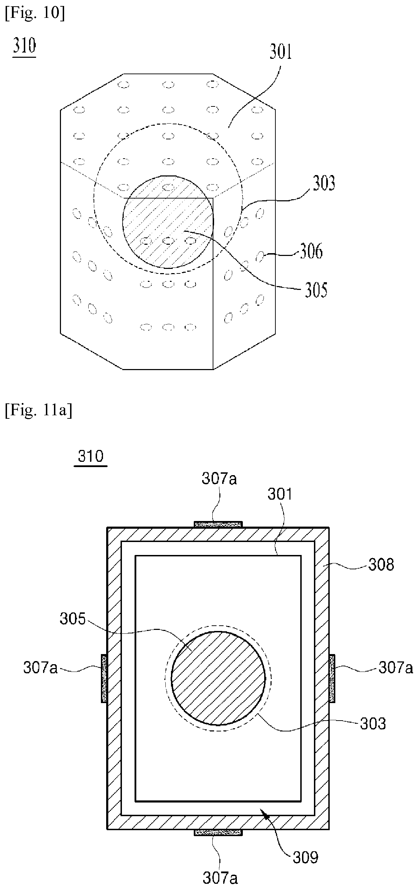

Next, as shown in Fig. 10, a plurality of minute holes 306 are formed in the external surface of the body part 301 of each mat member 310, and these minute holes 306 may minimize the sloshing of the fluid by increasing the specific surface area.

Next, as shown in Fig. 11a, each mat member 310 of the floating means 300 includes a body part 301 having a closed space 303 in the center of an inner portion, a buoyant body 305 arranged in the closed space 303 of the body part 301, and a cover 308 surrounding an external surface of the body part 301 and having at least one locking member 307a of a velcro tape type fixed to the external surface at predetermined intervals.

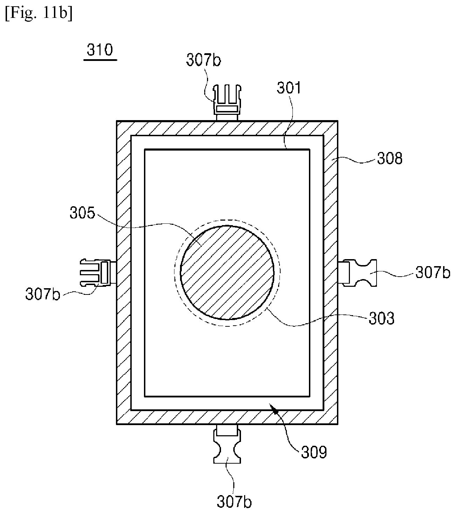

Also, as shown in Fig. 11b, instead of the locking member 307a of a velcro tape type, a locking member 307b of a hook type may be used.

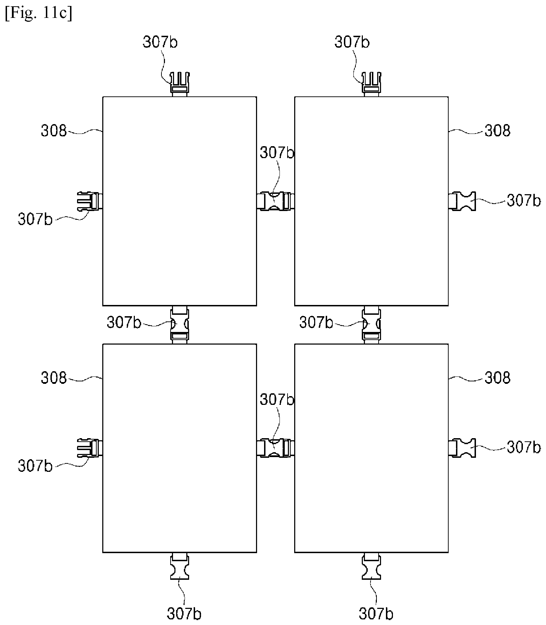

Thus, as shown in Fig. 11c, when a plurality of mat members 310 are arranged connectedly extending horizontally, without having to fix or connect neighboring body parts 301 or buoyant bodies 305 using a wire or rope, the plurality of mat members 310 may be connected quickly and easily using locking members 307 such as a velcro tape, a hook, etc.

Meanwhile, as shown in Fig. 11, by sealing the outside of the mat member 310 including a body part 301 and a buoyant body 305 once again, it is possible to continuously provide the unique function of attenuating the impact load resulting from the fluid while extending the body part 301 and the buoyant body 305 horizontally.

Meanwhile, preferably, a predetermined space 309 is formed between the body part 301 and the cover 308, and the position of the space 309 may be controlled so that the floating means 300 floats at a predetermined depth.

Also, as shown in Fig. 12, each mat member 310 of the floating means 300 may form an uneven pattern 307 at the side surface of the body part 301, and such uneven pattern 307 may be arranged irregularly, thereby minimizing the sloshing of the fluid.

Figs. 13a and 13b are cross-sectional views illustrating that a position adjustment means applied to the system for controlling an impact load resulting from fluid under internal/external force in a specific environment is formed in various sizes.

Referring to Figs. 13a and 13b, the position adjustment means 400 is connected to the floating means 300, so as to be arranged in at least one direction among the upper direction and lower direction of the floating means 300.

Here, the position adjustment means 400 arranged in the lower direction of the floating means 300 may be arranged at a predetermined interval from the bottom surface of the transportation means. In this case, the position adjustment means 400 may have a specific gravity greater than the fluid 200.

Also, the position adjustment means 400 arranged in the upper direction of the floating means 300 may be arranged at a predetermined interval from the surface of the fluid 200. In this case, the position adjustment means 400 may have a specific gravity smaller than the fluid 200.

When there are a plurality of position adjustment means 400, the plurality of position adjustment means may be connected to one another by a connecting member 430.

For example, with regard to the position adjustment means 400, when a first floating inlet 401, a second floating inlet 402, and a third floating inlet 403 are arranged in order in a downward direction from the surface 201 of the fluid 200, the first floating inlet 401, the second floating inlet 402, and the third floating inlet 403 are formed to have different specific gravity.

For example, the first floating inlet 401 has the smallest specific gravity, the third floating inlet 403 has the greatest specific gravity, and the second floating inlet 402 is formed to have a specific gravity greater than the first floating inlet 401 and smaller than the third floating inlet 403.

In some cases, when there are a plurality of position adjustment means, as the position adjustment means gets farther from the floating means 300, the specific gravity of the position adjustment means 400 may get smaller gradually.

Also, as shown in Fig. 13a, with regard to the position adjustment means 400, when the first floating inlet 401, the second floating inlet 402, and the third floating inlet 403 are arranged in order in a downward direction from the surface 201 of the fluid 200, the first floating inlet 401, the second floating inlet 402, and the third floating inlet 403 may have different sizes.

For example, the first floating inlet 401 may be the largest, the third floating inlet 403 may be the smallest, and the second floating inlet 402 may be smaller than the first floating inlet 401 and larger than the third floating inlet 403.

For example, the first floating inlet 403 may be larger or smaller than the second floating inlets 401 and 402.

In some cases, when there are a plurality of position adjustment means 400, as the position adjustment means gets farther from the floating means 300, the size of the position adjustment means 400 may get smaller or larger gradually.

In some cases, as shown in Fig. 13b, the first floating inlet 401, the second floating inlet 402, and the third floating inlet 403 may have the same size.

As such, the position adjustment means 400 may be produced in various shapes according to their size and specific gravity.

Figs. 14a and 14b are cross-sectional views illustrating intervals between the position adjustment means applied to the system for controlling an impact load resulting from fluid under internal/external force in a specific environment.

Referring to Figs. 14a and 14b, the position adjustment means 400 may be connected to the floating means 300 to be arranged in at least one direction of the upper direction and lower direction of the floating means 300.

Here, when there are a plurality of position adjustment means 400, the plurality of position adjustment means 400 are connected by a locking member 430.

For example, as shown in Fig. 14a, with regard to the position adjustment means 400, when the first floating inlet 401, the second floating inlet 402, and the third floating inlet 403 are arranged in order in a downward direction from the surface 201 of the fluid 200, interval d1 between the first floating inlet 401 and the second floating inlet 402, and interval d2 between the second floating inlet 402 and the third floating inlet 403 may be the same.

In some cases, as shown in Fig. 14b, with regard to the position adjustment means 400, when the first floating inlet 401, the second floating inlet 402, and the third floating inlet 403 are arranged in order in a downward direction from the surface 201 of the fluid 200, interval d1 between the first floating inlet 401 and the second floating inlet 402, and interval d2 between the second floating inlet 402 and the third floating inlet 403 may be different.

For example, interval d1 between the first floating inlet 401 and the second floating inlet 402 may be smaller or larger than interval d2 between the second floating inlet 402 and the third floating inlet 403.

In this regard, as the area where sloshing occurs varies according to the depth of the fluid 200, sloshing may be minimized by arranging the position adjustment means 400 only in an area with high sloshing according to the depth of the fluid by controlling the interval between the position adjustment means 400.

Figs. 15a and 15b are cross-sectional views illustrating a contact condition of position adjustment means applied to the system for controlling an impact load resulting from fluid under internal/external force in a specific environment.

Referring to Figs. 15a and 15b, the position adjustment means 400 may be connected to the floating means 300 to be arranged in at least one direction of the upper direction and lower direction of the floating means 300.

Here, when there are a plurality of position adjustment means 400, the plurality of position adjustment means 400 may be connected by a locking member 430.

For example, as shown in Fig. 15a, with regard to the position adjustment means 400, when the first floating inlet 401, the second floating inlet 402, and the third floating inlet 403 are arranged in order in a downward direction from the surface 201 of the fluid 200, the first floating inlet 401 and the second floating inlet 402 may be arranged to be in contact with each other, and the second floating inlet 402 and the third floating inlet 403 may be arranged to be in contact with each other.

In this case, sloshing may be minimized by arranging the position adjustment means 400 to be in contact with each other to be arranged in groups having a large area when sloshing occurring in the fluid occurs over a broad area in the depth direction.

In this case, as shown in Fig. 15b, with regard to the position adjustment means 400, when the first floating inlet 401, the second floating inlet 402, and the third floating inlet 403 are arranged in order in a downward direction from the surface 201 of the fluid 200, the first floating inlet 401 and the second floating inlet 402 may be arranged apart in a predetermined interval d, and the second floating inlet 402 and the third floating inlet 403 may be arranged apart in a predetermined interval d.

Figs. 16a to 16f are cross-sectional views illustrating an inner structure of a position adjustment means applied to the system for controlling an impact load resulting from fluid under internal/external force in a specific environment.

Referring to Figs. 16a to 16f, the position adjustment means 400 may be connected to the floating means 300 to be arranged in at least one direction of the upper direction and lower direction of the floating means 300.

As shown in Fig. 16a, the position adjustment means 400 may be configured only of a body part 411 made of materials such as aluminum or aluminum alloy to play the role of a buoyant body.

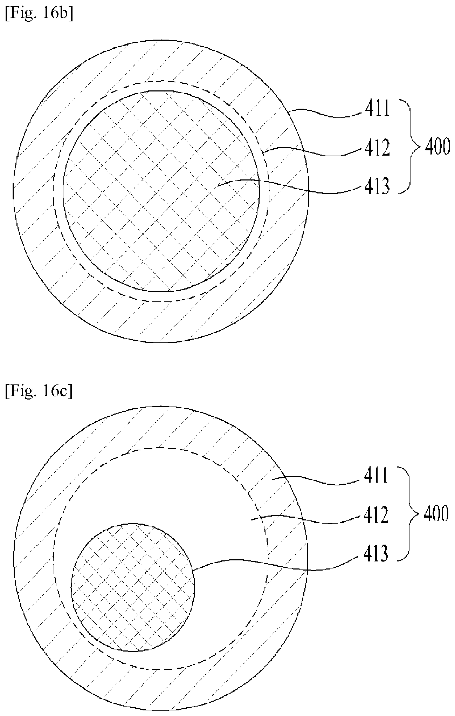

Next, as shown in Figs. 16b and 16c, the position adjustment means 400 may include a body part 411 having a closed space 412 in the center of an inner portion, and a buoyant body 413 arranged in the closed space 412 of the body part 411.

Here, as shown in Fig. 16b, the buoyant body 413 may take up the entire area of the closed space 412, and in some cases, as shown in Fig. 16c, the buoyant body 413 may take up only part of the area of the closed space 412 and leave a space for controlling the position so that the floating means 100 floats at a predetermined depth.

Here, the body part 411 may be a foam member, and the buoyant body 413 may be made of a material having a predetermined specific gravity such as aluminum or aluminum alloy.

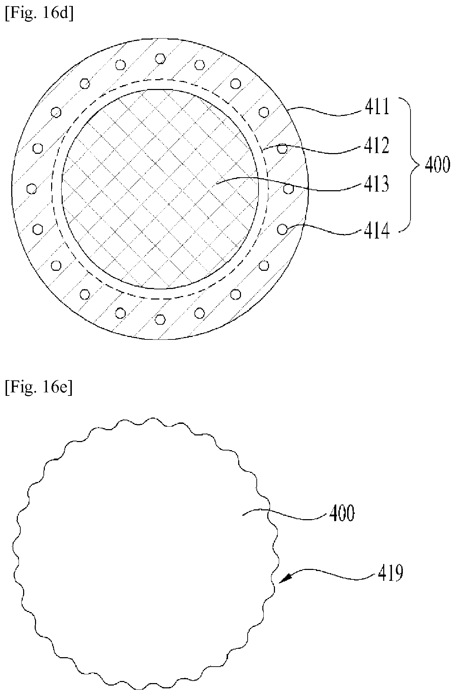

Next, as shown in Fig. 16d, the position adjustment means 400 may be formed of a plurality of minute holes 414 in the external surface of the body part 411.

These minute holes 414 may minimize the sloshing of the fluid by increasing the specific gravity.

Next, as shown in Fig. 16e, the first floating body 410 or the second floating body 420 of the position adjustment means 400 includes a body part 411 having a closed space 412 in the center of an inner portion, a buoyant body 413 arranged in the closed space 412 of the body part 411, and a cover 416 surrounding an external surface of the body part 411 and having locking members 417 and 418 fixed to the upper surface and lower surface.

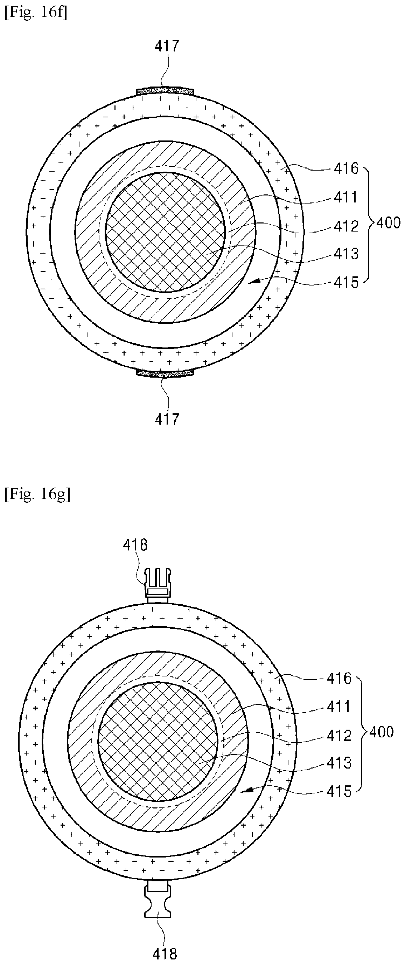

Here, as shown in Fig. 16e, the locking member may be used selected from a locking member 417 of a velcro tape type, or from a locking member 318 of a hook type as shown in Fig. 16f.

Thus, as shown in Fig. 16g, when a plurality of position adjustment means 400 are connectedly arranged horizontally, without having to fix or connect neighboring body parts 411 or buoyant bodies 413 using a wire or rope, the plurality of position adjustment means 400 may be connected quickly and easily using locking members 417 and 418 such as a velcro tape, a hook, etc.

Meanwhile, as shown in Figs. 16e and 16f, by sealing the outside of the position adjustment means 400 including a body part 411 and a buoyant body 413 once again, it is possible to continuously provide the unique function of attenuating the impact load resulting from the fluid while extending the body part 411 and the buoyant body 413 horizontally.

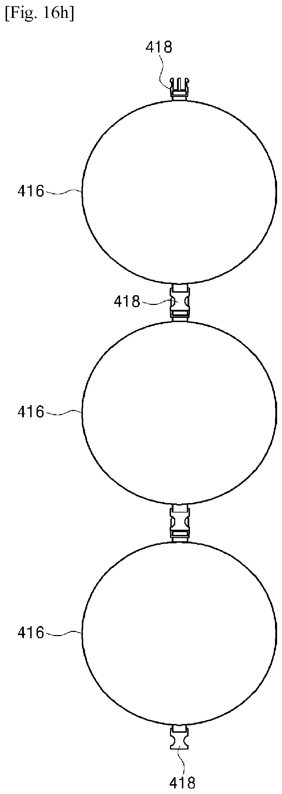

Also, as shown in Fig. 16h, the position adjustment means 400 may arrange an uneven pattern 419 at the side surface of the body part 411 irregularly, thereby minimizing the sloshing of the fluid.

Figs. 17a to 17d are perspective views illustrating a position adjustment means having a curtain shape applied to the system for controlling an impact load resulting from fluid under internal/external force in a specific environment.

Referring to Figs. 17a to 17d, the position adjustment means 400 having a curtain shape may be arranged in the lower direction of the floating means.

Here, as shown in Fig. 17a, the position adjustment means 400 having a curtain shape may be one single member arranged to surround a side circumference of the mat member 310 of the floating means.

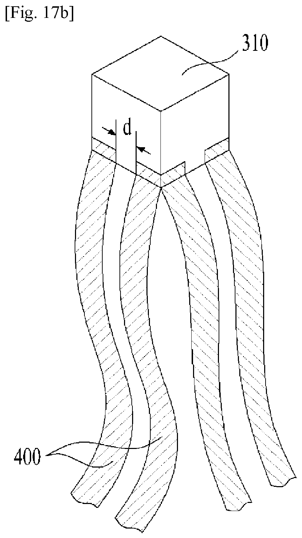

In some cases, as shown in Fig. 17b, the position adjustment means 400 having a curtain shape may be a plurality of members arranged to surround a side circumference of the connecting block 310 of the floating means.

Here, when there are a plurality of members of the position adjustment means 400 having a curtain shape, the adjacent position adjustment means 400 may be arranged at a predetermined interval d.

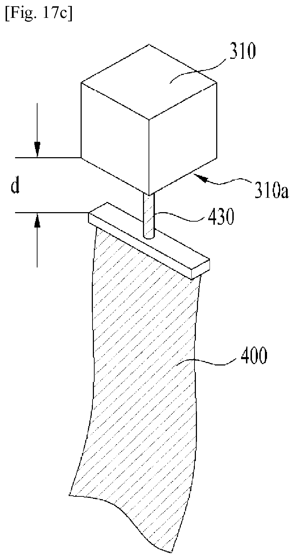

Also, as shown in Fig. 17c, the position adjustment means 400 having a curtain shape may be arranged at a predetermined interval d from the lower surface 310a of the mat member 310.

Here, the position adjustment means 400 having a curtain shape may be connected to the mat member 310 by a connecting member 430.

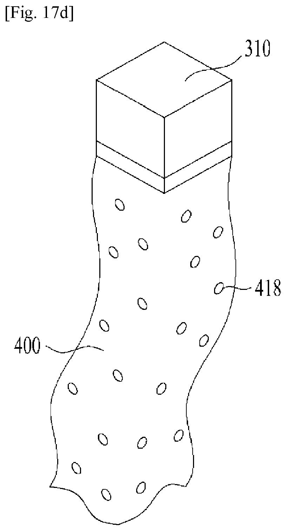

Also, as shown in Fig. 17d, the position adjustment means 400 having a curtain shape may be formed of a plurality of holes 418.

Here, the position adjustment means 400 having a curtain shape may include at least one of phenol resin, melamine resin, and synthetic resin thereof.

Figs. 18a to 18c are perspective views illustrating a condition of the connection between a position adjustment means having a curtain shape and a floating means applied to the system for controlling an impact load resulting from fluid under internal/external force in a specific environment.

As shown in Figs. 18a to 18d, the position adjustment means 400 having a curtain shape may be connected in the lower direction of the floating means 300.

Here, the position adjustment means 400 having a curtain shape may be connected to a mat member 310 using at least one of an adhesive 431 and a locking member 430.

As shown in Fig. 18b, one end of the connecting member 430 is locked to a side surface of the mat member 310, and the other end is locked to an end of the position adjustment means 400 having a curtain shape.

In some cases, the connecting member 430 may be locked to a lower surface of the mat member 310, and the other end may be locked to an end of the position adjustment means 400 having a curtain shape.

Figs. 19a and 19b are cross-sectional views illustrating an arrangement of a sensor sensing a movement of impact load of fluid applied to the system for controlling an impact load resulting from fluid under internal/external force in a specific environment.

As shown in Figs. 19a and 19b, the sensing means 500 may sense a movement of an impact load of the fluid by being arranged in at least one of a floating means 300, a position adjustment means 400, and a fluid 200. The sensing means 500 may include a selective combination of at least one of an acceleration sensor 510, an inertia sensor 520, a vibration sensor 530, an acoustic sensor 540, a temperature sensor 550, a pressure sensor 560, a shape sensor 570, and a strain sensor 580.

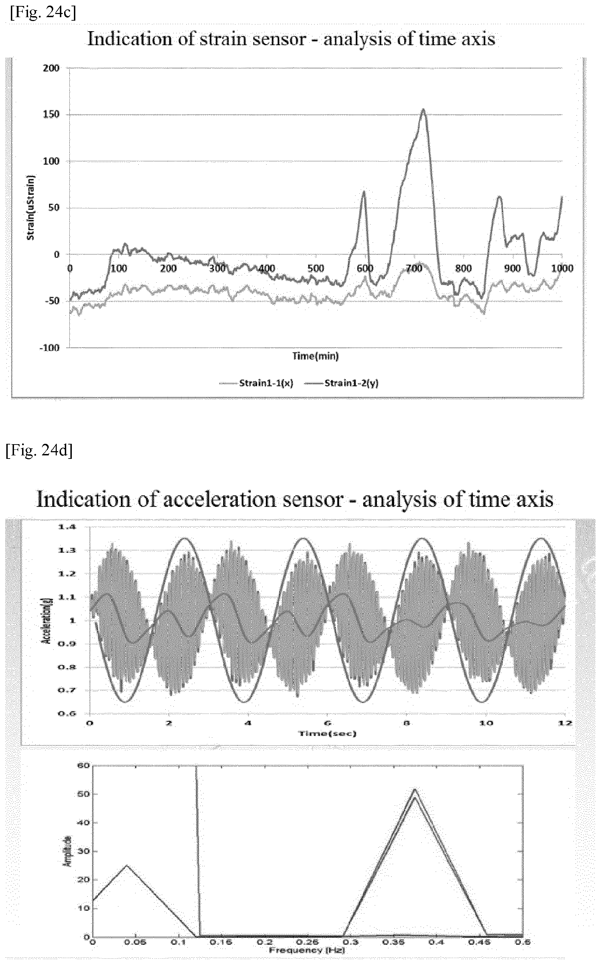

Here, a bumper plate 150 controlling the movement of the impact load of the fluid may be further arranged in an inner wall of the transportation means 100, and a sensing means 500 sensing the movement of the impact load of the fluid may be further arranged in the bumper plate 150. Fig. 24 illustrates examples of measurement data according to the acceleration sensor, temperature sensor, and pressure sensor.

Here, the acceleration sensor 510 is a sensor generating power when an object with mass receives acceleration and measuring the change in speed (acceleration) of at least one axis. It may measure dynamic power such as acceleration, vibration, impact, etc. of the floating means 300, position adjustment means 400, fluid 200 and bumper plate 150, etc.

Also, the inertia sensor 520 is a sensor detecting inertial force acting on an inertial object by the acceleration applied. It may measure the acceleration, speed, direction, distance, etc. of the measurement object, which is a moving object.

Next, the vibration sensor 530 is a sensor detecting the vibration of mechanical structures and fluid. It may measure vibration generated in the floating means 300, position adjustment means 400, fluid 200, and bumper plate 150, etc., and measure the vibration generated by the impact between the floating means 300 and transportation means 100 such as a container, etc.

Next, the sound sensor 540 is a sensor sensing the conversion of particle motion generated by an elastic wave into electric signals. It may receive an acoustic emission wave and convert it into an acoustic emission signal, and detect minute crevice and crack generated in the floating means 300, position adjustment means 400, fluid 200, and bumper plate 150, etc.

The temperature sensor 550 is a sensor detecting the temperature of gas, fluid and solid. It may measure the temperature varying in the floating means 300, position adjustment means 400, fluid 200, bumper plate 150, transportation means 100, etc.

Also, the pressure sensor 560 is a sensor detecting the pressure of gas or fluid. It is a sensor using heat conductivity of molecule density in addition to displacement or deformation. It may measure the change in pressure according to the capacity of fluid 200 within transportation means 100 such as a container, etc.

Next, the shape sensor 570 is a shape recognizing sensor confirming the presence, position and shape of an object. It may detect the presence, position and shape of the floating means 300, position adjustment means 400, fluid 200, bumper plate 150, transportation means 100, etc.

As such, the present invention may precisely measure the predicted occurrence of impact load of the fluid using various sensing means 500.

Figs. 20a and 20b are cross-sectional views illustrating a condition having a bumper plate installed in an inner wall of a transportation means when the system for controlling an impact load resulting from fluid under internal/external force in a specific environment according to a preferable embodiment of the present invention is installed in a transportation means.

Referring to Figs. 20a and 20b, a bumper plate 150 controlling the movement of the impact load of the fluid may be arranged in the inner wall 120 of the transportation means 100.

Here, the bumper plate 150 is fixed to a fixed axis connected to the inner wall 120 of the transportation means 100, enabling rotation movement in the up/down/left/right direction so as to change the moving direction of the fluid 200.

That is, as shown in Figs. 20a and 20b, the bumper plate 150 may rotate in the Y-axis direction and Z-axis direction.

In this case, the surface of the bumper plate 150 may be inclined in a predetermined angle with respect to the surface of the inner wall 120 of the transportation means 100.

For example, when a plurality of bumper plates 250 are arranged in the height direction of the transportation means 100, the angle between the surface of the bumper plate 150 and the inner wall 120 surface of the transportation means 100 may vary in the height direction of the transpiration means 100.

Also, the surface of the bumper plate 150 may be irregular.

As such, the reason for arranging the bumper plate 150 is to attenuate the sloshing of the fluid 200 facing the inner wall 120 of the transportation means 100 with the irregular surface of the bumper plate 150, and to minimize the sloshing by offsetting the fluids 200 having different moving directions by changing the moving direction of the fluid 200 to be irregular.

Figs. 21a and 21b are side cross-sectional views illustrating a thickness of a bumper plate installed in an inner wall of a transportation means when the system for controlling an impact load resulting from fluid under internal/external force in a specific environment according to a preferable embodiment of the present invention is installed in a transportation means.

Referring to Figs. 21a and 21b, a bumper plate 150 controlling the movement of the impact load of the fluid may be arranged in the inner wall of the transportation means 100.

Here, as shown in Fig. 21a, the thickness t of the bumper plate 150 may be constant from one end to the other end.

In this case, the surface of the bumper plate 150 may be formed of an irregular uneven pattern 150a.

Also, the surface of the bumper plate 150 may be inclined in a predetermined angle with respect to the inner wall surface of the transportation means 100.

In some cases, as shown in Fig. 21b, the thickness t of the bumper plate 150 may gradually gets thinner from one end to the other end.

Here, the bumper plate 150 may be controlled so that the surface facing the inner wall surface of the transportation means 100 is parallel, and the surface opposite to the inner wall surface of the transportation means 100 is inclined at a predetermined angle. That is, the bumper plate 150 is installed to be controllable in a direction selected from up, down, left and right directions by the worker, so as to effectively disperse the power applied to the transportation means 100 or maritime structure by passive fluid dynamics or motion generation of sloshing generated by being set in the up/down direction or left/right direction.

Fig. 22 is a block diagram of a control means 600 applied to the system for controlling an impact load resulting from fluid under internal/external force in a specific environment. Fig. 23 is a control flow chart for explaining a control operation of the system for controlling an impact load resulting from fluid under internal/external force in a specific environment.

First, referring to Fig. 22, the control mean 600 includes a sensor measuring part 610 converting a physical change of a measurement object sensed by the sensing means 500 into a digital signal and outputting the digital signal, a processor part for analysis and comparison algorithm 620 conducting structure interpretation, comparison and analysis on an impact load inside the fluid 200 and an impact load generated in the floating means 300, the position adjustment means 400, the transportation means 100 or the maritime structure by using data transmitted and measured at the sensor measuring part 610, a database 630 storing a look-up table made by making an algorithm of the result analyzed at the processor part for analysis and comparison algorithm 620, a processor for predictive diagnosis and control signal algorithm 640 predicting impact load data on a response of the transportation means 100 or the maritime structure by comparing data measured at the sensing means 500 with data on internal/external force accumulated in the look-up table stored in the database 630, and a remote monitoring and controlling part 650 remotely-controlling the driving of a control target device in the transportation means 100 by using a predictive control signal algorithm outputted from the processor for predictive diagnosis and control signal algorithm 650.

Here, the look-up table records time-serial data by the year, and the look-up table may be modified by comparing the time-serial data by the year accumulated until the previous year with the data measured through the sensing means 500.

Hereinafter, the operation of the control means is explained referring to Fig. 23.

First, the sensor measuring part 610 receives change in acceleration, inertia, vibration, sound, temperature, pressure, shape, strain, etc. of the sensed object sensed by the sensing means 500 in the fluid 200, floating means 300 and position adjustment means 400 and converts it into digital signal that may be measured (S110, S120).

The processor part for analysis and comparison algorithm 620 structurally interprets, compares and analyzes the impact load resulting from non-periodic coupled energy and response thereto occurring in the fluid 200, floating means 300 and position adjustment means 400, transportation means 100 or maritime structure by using data measured by the sensing means 500 transmitted to the sensor measuring part 610 (S130).

Next, the processor part for analysis and comparison algorithm 620 makes a look-up table with FEA-based simulation reflecting empirical data measured in real-time at the database 630 by making an algorithm of the analyzed result by using comparative algorithm and predictive control signal algorithm (S140, S150).

Here, making an algorithm in S 140 includes backing up FEA-based simulation reflecting empirical data measured in real-time (S141), conducting FEA-based simulation storing and default setting (S143), making a database for situation recognition of external conditions of the environment and measurement results (S145), generating and storing modified log (S147), and generating report and backing up electronic file (S149).

Also, the predictive control signal algorithm in S150 includes backing up the predictive control simulation reflecting empirical data (S151), conducting FEA-based simulation storing and default setting (S153), making a database for situation recognition of driving the predictive control device (S155), generating and storing modified log (S157), and generating report and backing up electronic file (S159).

The remote monitoring and controlling part 640 remotely-controls the driving of the control target device (for example, ballast tank, tensioner, thruster, rudder, etc.) in the transportation means 100 by using a predictive control signal algorithm stored in the database 630 (S170).

Thus, the remote monitoring and controlling part 650 may control the posture or navigation path of the transportation means 100 or maritime structure using data on the predicted response of the transportation means 100 or maritime structure (S 180).

The system for controlling an impact load resulting from a fluid under an internal/external force in a specific environment as explained in the above can minimize the impact load and boil off gas (BOG) of the fluid while efficiently sensing the impact load of various fluids including sloshing, slamming, ice collision, etc., and allow a simple and quick process of the work of connecting a plurality of mat members and maintenance thereof through a detachable member fixed to the cover of a mat member.

It will be apparent that, although the preferred embodiments have been shown and described above, the present specification is not limited to the above-described specific embodiments, and various modifications and variations can be made by those skilled in the art.

## Claims

1. A transportation means (100) for storing fluid (200) therein comprising:
a bumper plate (150) fixed to a fixed axis connected to an inner wall (120) of the transportation means (100) and suitable to reduce sloshing of the fluid (200) or to control an impact load resulting from fluid (200),
wherein the bumper plate (150) is adapted to rotate in the up, down, left, or right direction of the transportations means, and
**characterized in that** the bumper plate (150) is adapted to rotate about Y axis and Z axis among X, Y, Z axis when Y axis direct to upward of the transportation means, and Z axis is perpendicular to Y axis and parallel to the inner wall (120) of the transportation means (100),
wherein a support protrudes from the inner wall (120), and the fixed axis is arranged at an end of the support, enabling rotation movement in the up, down, left, or right direction.

2. The transportation means (100) of claim 1, wherein the surface of the bumper plate (150) is inclined in a predetermined angle with respect to the surface of the inner wall (120) of the transportation means (100).

3. The transportation means (100) of any one of the preceding claims, wherein the surface of the bumper plate (150) is irregular.

4. The transportation means (100) of any one of the preceding claims, wherein the thickness (t) of the bumper plate (150) is constant from one end to the other end thereof.

5. The transportation means (100) of any one of claims 1 to 3, wherein the thickness (t) of the bumper plate (150) gets gradually thinner from one end to the other end thereof.

6. The transportation means (100) of claim 5, wherein the surface of the bumper plate (150) facing the inner wall of the transportation means (100) is parallel to the inner wall, and the surface of the bumper plate (150) opposite to the inner wall surface of the transportation means (100) is inclined at a predetermined angle.

7. The transportation means (100) of any one of the preceding claims, further comprising: a plurality of bumper plates (250) arranged in the height direction of the transportation means (100), wherein the angle between the surface of the bumper plate (150) and the inner wall (120) of the transportation means (100) vary in the height direction of the transpiration means (100).

8. The transportation means (100) of any one of the preceding claims, wherein the bumper plate (150) comprises a sensing means (500) to sense the movement of the impact load of the fluid (200).

9. The transportation means (100) of any one of the preceding claims, further comprising: a floating means (300) arranged horizontally inside the fluid (200).

10. The transportation means (100) of any one of the preceding claims, wherein the fluid (200) is liquified gas such as LNG, LPG, hydrate, or crude oil, etc., that effect of internal/external force in the environment.

11. The transportation means (100) of any one of the preceding claims, further comprising:
a floating means (300) arranged horizontally inside a predetermined amount of fluid (200) existing in an open space or in a space having a sealed interior, the floating means connected to each other by a rope or wire;
a position adjustment means (400) vertically connected to the floating means (300) and arranged in a preset position inside the fluid.

12. The transportation means (100) of claim 11, further comprising: a sensing means (500) selectively installed inside the fluid (200), on the floating means (300), on the position adjustment means (400), or on a structure positioned in the periphery to sense a physical change of at least one preset measurement object.

## Patentansprüche

1. Transportmittel (100) zum Aufnehmen von Flüssigkeit (200) darin, umfassend:
eine Stoßfängerplatte (150), die an einer festen Achse befestigt ist, die mit einer Innenwand (120) des Transportmittels (100) verbunden und geeignet ist, das Schwappen der Flüssigkeit (200) zu reduzieren oder eine von der Flüssigkeit (200) ausgehende Stoßbelastung zu steuern,
wobei die Stoßfängerplatte (150) dazu ausgebildet ist, sich in der Aufwärts-, Abwärts-, Links- oder Rechtsrichtung des Transportmittels zu drehen, und
**dadurch gekennzeichnet, dass** die Stoßfängerplatte (150) dazu ausgebildetist, sich um die Y-Achse und die Z-Achse unter der X-, Y- und Z-Achse zu drehen, wenn die Y-Achse direkt nach aufwärts des Transportmittels gerichtet ist und die Z-Achse rechtwinklig zur Y-Achse und parallel zur Innenwand (120) des Transportmittels (100) verläuft,
wobei eine Stütze von der Innenwand (120) hervorragt und die feste Achse an einem Ende der Stütze angeordnet ist, was eine Drehbewegung in der Aufwärts-, Abwärts-, Links- oder Rechtsrichtung ermöglicht.

2. Transportmittel (100) gemäß Anspruch 1, wobei die Oberfläche der Stoßfängerplatte (150) in einem vorbestimmten Winkel in Bezug auf die Oberfläche der Innenwand (120) des Transportmittels (100) geneigt ist.

3. Transportmittel (100) gemäß einem der vorhergehenden Ansprüche, wobei die Oberfläche der Stoßfängerplatte (150) unregelmäßig ist.

4. Transportmittel (100) gemäß einem der vorhergehenden Ansprüche, wobei die Dicke (t) der Stoßfängerplatte (150) von einem Ende zum anderen Ende konstant ist.

5. Transportmittel (100) gemäß einem der Ansprüche 1 bis 3, wobei die Dicke (t) der Stoßfängerplatte (150) von einem Ende zum anderen Ende allmählich dünner wird.

6. Transportmittel (100) gemäß Anspruch 5, wobei die der Innenwand des Transportmittels (100) zugewandte Fläche der Stoßfängerplatte (150) parallel zur Innenwand verläuft und die der Innenwandfläche des Transportmittels (100) gegenüberliegende Fläche der Stoßfängerplatte (150) in einem vorgegebenen Winkel geneigt ist.

7. Transportmittel (100) gemäß einem der vorhergehenden Ansprüche, ferner umfassend: eine Vielzahl von Stoßfängerplatten (250), die in der Höhenrichtung des Transportmittels (100) angeordnet sind, wobei der Winkel zwischen der Oberfläche der Stoßfängerplatte (150) und der Innenwand (120) des Transportmittels (100) in der Höhenrichtung des Transportmittels (100) variiert.

8. Transportmittel (100) gemäß einem der vorhergehenden Ansprüche, wobei die Stoßfängerplatte (150) ein Sensormittel (500) umfasst, um die Bewegung der Stoßlast der Flüssigkeit (200) zu erfassen.

9. Transportmittel (100) gemäß einem der vorhergehenden Ansprüche, ferner umfassend: ein Schwimmmittel (300), das horizontal in der Flüssigkeit (200) angeordnet ist.

10. Transportmittel (100) gemäß einem der vorhergehenden Ansprüche, wobei die Flüssigkeit (200) verflüssigtes Gas wie beispielsweise LNG, LPG, Hydrat oder Rohöl usw. ist, das durch innere/äußere Kräfte in der Umgebung entsteht.

11. Transportmittel (100) gemäß einem der vorhergehenden Ansprüche, ferner umfassend:
ein Schwimmmittel (300), das horizontal innerhalb einer vorbestimmten Flüssigkeitsmenge (200) angeordnet ist, die sich in einem offenen Raum oder in einem Raum mit einem abgedichteten Innenraum befindet, wobei die Schwimmmittel durch ein Seil oder einen Draht miteinander verbunden sind;
ein Positionseinstellmittel (400), das vertikal mit dem Schwimmmittel (300) verbunden ist und in einer voreingestellten Position innerhalb der Flüssigkeit angeordnet ist.

12. Transportmittel (100) gemäß Anspruch 11, ferner umfassend: ein Sensormittel (500), das selektiv in der Flüssigkeit (200), auf dem Schwimmmittel (300), auf dem Positionseinstellmittel (400) oder auf einer am Umfang positionierten Struktur installiert ist, um eine physikalische Änderung mindestens eines voreingestellten Messobjekts zu erfassen.

## Revendications

1. Moyen de transport (100) pour stocker un fluide (200) dans celui-ci, comprenant :
une plaque d'amortissement (150) fixée à un axe fixe, relié à une paroi intérieure (120) du moyen de transport (100), et appropriée pour réduire le ballottement du fluide (200) ou pour contrôler une charge d'impact résultant du fluide (200),
dans lequel la plaque d'amortissement (150) est adaptée pour effectuer une rotation dans la direction ascendante, descendante, gauche, ou droite du moyen de transport, et
**caractérisé en ce que** la plaque d'amortissement (150) est adaptée pour effectuer une rotation autour de l'axe Y et de l'axe Z parmi les axes X, Y, Z, lorsque l'axe Y se dirige vers le haut du moyen de transport, et l'axe Z est perpendiculaire à l'axe Y et parallèle à la paroi intérieure (120) du moyen de transport (100),
dans lequel un support fait saillie à partir de la paroi intérieure (120), et l'axe fixe est agencé à une extrémité du support, permettant un mouvement de rotation dans la direction ascendante, descendante, gauche, ou droite.

2. Moyen de transport (100) selon la revendication 1, dans lequel la surface de la plaque
d'amortissement (150) est inclinée à un angle prédéterminé par rapport à la surface de la paroi intérieure (120) du moyen de transport (100).

3. Moyen de transport (100) selon l'une quelconque des revendications précédentes, dans lequel la surface de la plaque d'amortissement (150) est irrégulière.

4. Moyen de transport (100) selon l'une quelconque des revendications précédentes, dans lequel l'épaisseur (t) de la plaque d'amortissement (150) est constante d'une extrémité à l'autre extrémité de celle-ci .

5. Moyen de transport (100) selon l'une quelconque des revendications 1 à 3, dans lequel l'épaisseur (t) de la plaque d'amortissement (150) devient progressivement plus mince d'une extrémité à l'autre extrémité de celle-ci.

6. Moyen de transport (100) selon la revendication 5, dans lequel la surface de la plaque
d'amortissement (150) faisant face à la paroi intérieure du moyen de transport (100) est parallèle à la paroi intérieure, et la surface de la plaque d'amortissement (150) opposée à la paroi intérieure surface du moyen de transport (100) est inclinée à un angle prédéterminé.

7. Moyen de transport (100) selon l'une quelconque des revendications précédentes, comprenant en outre :
une pluralité de plaques d'amortissement (250) agencées dans la direction de hauteur du moyen de transport (100), dans lequel l'angle entre la surface de la plaque d'amortissement (150) et la paroi intérieure (120) du moyen de transport (100) varie dans la direction de hauteur du moyen de transport (100).

8. Moyen de transport (100) selon l'une quelconque des revendications précédentes, dans lequel la plaque d'amortissement (150) comprend un moyen de détection (500) pour détecter le mouvement de la charge d'impact du fluide (200) .

9. Moyen de transport (100) selon l'une quelconque des revendications précédentes, comprenant en outre : un moyen flottant (300) agencé horizontalement à l'intérieur du fluide (200).

10. Moyen de transport (100) selon l'une quelconque des revendications précédentes, dans lequel le fluide (200) est du gaz liquéfié tel que LNG, LPG, un hydrate, ou du pétrole brut, etc., qui affecte la force interne/externe dans l'environnement.

11. Moyen de transport (100) selon l'une quelconque des revendications précédentes, comprenant en outre :
un moyen flottant (300) agencé horizontalement à l'intérieur d'une quantité prédéterminée de fluide (200) existant dans un espace ouvert ou dans un espace ayant un intérieur étanche, les moyens flottant étant reliés les uns aux autres par un câble ou un fil ;
un moyen d'ajustement de position (400) verticalement relié au moyen flottant (300) et agencé dans une position prédéfinie à l'intérieur du fluide.

12. Moyen de transport (100) selon la
revendication 11, comprenant en outre : un moyen de détection (500) sélectivement installé à l'intérieur du fluide (200), sur le moyen flottant (300), sur le moyen d'ajustement de position (400), ou sur une structure positionnée dans la périphérie pour détecter un changement physique d'au moins un objet de mesure prédéfini.
